# EUROPEAN PATENT SPECIFICATION

(11) **EP 2 025 956 B1**
(45) Date of publication and mention of the grant of the patent: **27.11.2013**
(21) Application number: 08161313.5
(22) Date of filing: 29.07.2008
(51) Int. Cl.: F16C 1/12

(54) **Coupling element for bowden cables**
Kupplungselement für Bowdenzüge
Elément de couplage pour câbles Bowden

(30) Priority: 14.08.2007 GB 0715797
(43) Date of publication of application: 18.02.2009
(73) Proprietor: CNH U.K. LIMITED, Basildon, Essex S14 3AD (GB)
(72) Inventor: Hawkins, Matthew, Walton-on-Thames, Surrey (GB)
(74) Representative: CNH IP Department

(56) References cited:
- FR-A1- 2 712 536
- JP-U- 59 085 412
- US-A- 5 829 314

## Description

### Field of the invention

The present invention relates to a coupling element for connecting the ends of two Bowden cables to one another.

### Background of the invention

As is well known, a Bowden cable is a flexible cable used to transmit a force by the movement of an inner cable relative to a hollow outer sheath. The linear movement of the inner cable is generally used to transmit a pulling force though in some lighter applications it can also be used to transmit a pushing force. Typical automotive applications are to permit remote gear selection or clutch operation.

In certain applications, where a long cable is needed and/or where the cable has to follow a tortuous path, it is desirable to form the cable in two separate sections. The two sections are connected to one another by means of a coupling element which secures the outer sheaths to one another and the inner cables to one another, so that the two sections act in series.

FR 2,805,536 and FR 2,712,536 both describe coupling elements for connecting two Bowden cables end to end. Each of the coupling elements comprises a casing to which the outer sheaths of the two cables are anchored and the nipples on the adjoining ends of the two inner cables are shaped to connect to one another in a form-locking manner.

GB 2 286 441 describes a coupling system which allows independent operating of two cables by a single operating member. This member is foreseen with a slider whereto the cables are connected. Moving the slider in a certain direction will operate the cables.

US 5,829,314 describes a device for eliminating cable flop, for use with bicycle brake cable detanglers used on "trick" bicycles. The device includes a first cable to which is connected an anchor or cylindrical member. The anchor is secured within an anchor housing. Also secured within the anchor housing, and extending away from the anchor housing in a direction opposite the first cable are two other cables with anchors. The two cables opposing the first cable are rotatably secured in the anchor housing whereby the cables can move laterally with respect to each other to reduce "flop" in the cable detangler.

The length of such coupling elements has been found to preclude their use in certain applications where space is confined. In this respect, it should be noted that the ends of the two outer sheaths need to be mounted in line with one another and the separation between the ends of the outer sheaths dictates the maximum displacement of the inner cables. Consequently, the casing needs to be long and the cable is necessarily rigid over the entire length of the coupling.

### Summary of the invention

With a view to mitigating the foregoing disadvantage, the present invention provides a coupling element for coupling the ends of two Bowden cables to one another, as claimed in claim 1.

In one embodiment of the invention, the mechanical linkage consists of a slider guided for linear movement relative to the base.

The slider may suitably be Z-shaped and the sheaths of the Bowden cable may be anchored to the base on opposite sides of the slider and arranged generally parallel to the direction of movement of the slider. The ends of the sheaths in this configuration may be generally level with one another, i.e. they may lie on a line perpendicular to the line of movement of the slider. This reduces the length of the space needed to accommodate the coupling element.

In an alternative embodiment of the invention, the mechanical linkage may include one or more levers that are pivotably mounted on the base.

Connecting the ends of the inner cables to the arms of a bell crank lever pivotably mounted on the base offers the advantage that the outer sheaths need not lie parallel to one another when secured to the base, thereby allowing force to be transmitted around a tight corner.

If the arms of the bell crank lever are of different lengths, the inner cables will travel through different distances from the other, thereby providing a mechanical advantage.

As a further possibility, the ends of the inner cables may be connected to two separate levers connected to meshing cogs that are rotatably mounted on the base. In this case, a mechanical advantage can once again be gained by using cogs with a different number of teeth or by using lever arms of different length.

In all the embodiments of the invention, the base may either be left free to move with the outer sheaths of the two Bowden cables or it may be provided with fixing features to allow the cables to be secured to a stationary member, such as an engine or a chassis member.

### Brief description of the drawings

The invention will now be described further, by way of example, with reference to the accompanying drawings, in which:
Figure 1 is a schematic representation of a coupling element in accordance with an embodiment of the invention, and
Figures 2 and 3 are similar representations of two other types of coupling elements.

### Detailed description of the preferred embodiment(s)

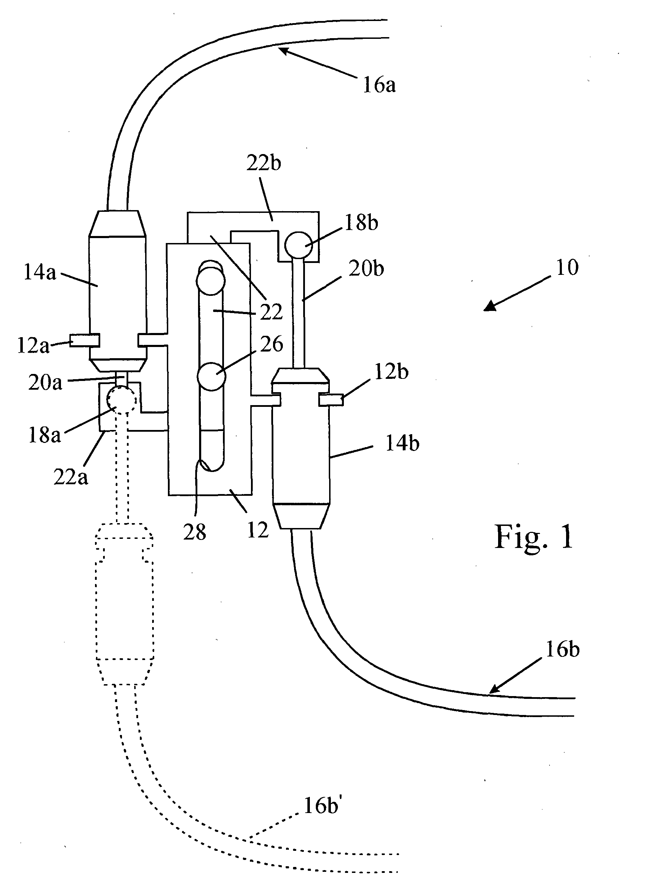

Figure 1 shows a coupling element 10 comprising a base plate 12 having anchoring flanges 12a and 12b for the outer sheaths 14a and 14b of two Bowden cables 16a and 16b.
Nipples 18a and 18b at the ends of the inner cables 20a and 20b are connected to laterally projecting arms 22a and 22b of a Z-shaped slider 22. The slider has large-headed bolts 26 which secure it to the base 12. The bolts 26 pass through an elongate slot 28 in the base 12 so as to allow the slider 22 to move linearly and freely relative to the base 12.

In this embodiment of the invention, if the inner cable 20b is retracted into its sheath 14b, it will pull down on the arm 22b of the slider, causing the slider to move downwards, as viewed. The other arm of the Z-shaped slider 22 will then pull down on the inner cable 20a of the Bowden cable 16a in order to transmit the pulling force of the Bowden cable 16b to the opposite end of the Bowden cable 16a.

To illustrate the advantage offered by this embodiment of the invention, the position occupied by the Bowden cable 16b' if using a known coupling, such as that taught by FR 2,805,853 or FR 2,712,536, has been drawn in dotted lines. As can clearly be seen from Figure 1, the coupling element 10 allows a tighter U-bend to be achieved, this enabling the coupling element to be used in situations where a conventional coupling element would not fit.

It will be appreciated that all the drawings are schematic and are intended to show only the principle of operation of the invention. In a practical realisation, the base would be part of a housing encasing the slider 22 and the groove 28 would be both protected and lubricated. The drawings also do not show the manner in which the outer sheaths and the inner cables are secured to the base 12 and to the slider 22, such details being in themselves well known to a person skilled in the art.

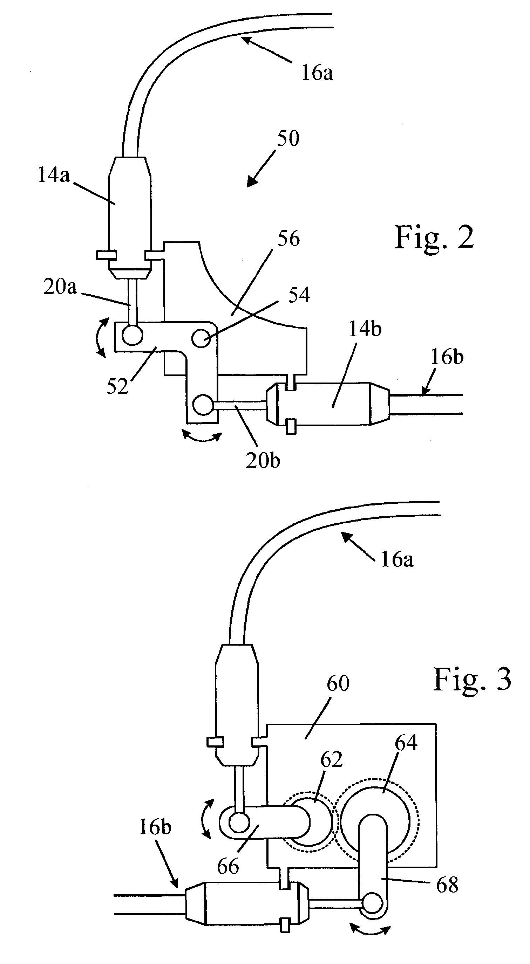

The coupling element 50 of Figure 2 comprises a two-armed lever 52, such as the illustrated bell crank lever, pivotable relative to a base plate 56 about a pivot pin 54. The ends of the arms of the lever 52 are connected to the inner cables 20a and 20b while the outer sheaths 14a and 14b of the Bowden cables 16a and 16b are again anchored to the base plate 56. Force is transmitted between the two Bowden cable 16a and 16 by the pivoting of the two-armed lever 52 instead of the linear motion of the slider in the first described embodiment. Once again a tighter U-bend can be achieved than in the prior art, more especially since the cable 16b need not in this case be bent at all and the angle between the two arms of the lever 52 can be selected at will to suit the geometry of the space through which the cable is required to pass.

The coupling element of Figure 3 has a base plate carrying two meshing cogs 62 and 64 each connected by way of a respective lever 66, 68 to the inner cable of one of the Bowden cables. A pulling force on the cable 16a will cause the cog 62 to rotate clockwise. This will in turn cause the cog 64 to rotate counter clockwise and the lever 68 to apply a pulling force to the Bowden cable 16b.

This coupling element is suited to a situation where the cable is desired to pass through a tight S-bend.

In both of the coupling elements of Figures 2 and 3, one can obtain a mechanical advantage by making the levers or the lever arms of different length and in the case of Figure 3 one cog may, as illustrated, have a different number of teeth from the other.

It will further be noted that in the embodiment of the invention, the outer sheaths of the cables are not aligned with one another, being either offset from one another or inclined relative to one another. Such a misalignment is key to enabling the cable to pass through shorter spaces, as it trades off the length required to accommodate the coupling element against the required width.

## Claims

1. A coupling element for coupling the ends of two Bowden cables (16a, 16b) to one another, comprising a base (12), means for anchoring (12a,12b) the outer sheaths (14a, 14b) of the two cables (16a, 16b) to the base (12), and a mechanical linkage (22, 22a, 22b, 26) movably supported on the base (12) and connectible to the inner cables (20a, 20b) of the two Bowden cables (16a, 16b) to transmit force from one inner cable to the other, the mechanical linkage consisting of a slider (22) guided for movement relative to the base (12), the outer sheaths (14a, 14b) of the two cables (16a, 16b) being anchored to the base (12) on opposite sides of the slider (22), **characterized in that** the slider (22) is Z-shaped and the ends of the outer sheaths (14a, 14b) are generally level with one another and both ends of the outer sheaths (14a, 14b) lie on a line perpendicular to the line of movement of the slider (22).

2. A coupling element as claimed in claim 1, wherein the outer sheaths (14a, 14b) of the two cables (16a, 16b) are not aligned with one another.

3. A coupling element as claimed in claim 2, wherein the outer sheaths (14a, 14b) are offset from one another or are inclined relative to one another.

4. A coupling element as claimed in any of the preceding claims, wherein the outer sheaths (14a, 14b) are arranged generally parallel to the direction of movement of the slider (22).

5. A coupling element as claimed in any of the preceding claims, wherein the ends of the inner cables (20a, 20b) are connected to laterally projecting arms (22a, 22b) of the Z-shaped slider (22).

6. A coupling element as claimed in any of the preceding claims, wherein the Z-shaped slider (22) comprises securing means (26) for securing the slider (22) to the base (12).

7. A coupling element as claimed in claim 6, wherein the securing means (26) pass through an elongated slot (28) in the base (12) so as to allow the slider (22) to move relative to the base (12).

8. A coupling element as claimed in any of the preceding claims, wherein the base (12) is part of a housing encasing the slider (22).

## Patentansprüche

1. Kupplungselement zum Kuppeln der Enden von zwei Bowdenzügen (16a, 16b) miteinander, mit einer Basis (12), Einrichtungen zum Verankern (12a, 12b) der Außenhüllen (14a, 14b) der zwei Bowdenzüge (16a, 16b) an der Basis (12), und einem mechanischen Gestänge (22, 22a, 22b, 26), das beweglich an der Basis (12) gehaltert und mit den inneren Zugseilen (20a, 20b) der zwei Bowdenzüge (16a, 16b) verbindbar ist, um eine Kraft von einem inneren Zugseil auf das andere zu übertragen, wobei das mechanische Gestänge aus einem Gleitstück (22) besteht, das für eine Bewegung gegenüber der Basis (12) geführt ist, wobei die Außenhüllen (14a, 14b) der zwei Bowdenzüge (16a, 16b) an der Basis (12) auf entgegengesetzten Seiten des Gleitstückes (22) verankert sind, **dadurch gekennzeichnet, dass** das Gleitstück (22) Z-förmig ist und die Enden der zwei Außenhüllen (14a, 14b) allgemein auf der gleichen Ebene liegen und beide Enden der Außenhüllen (14a, 14b) auf einer Linie liegen, die unter einem rechten Winkel zu der Linie der Bewegung des Gleitstückes (22) steht.

2. Kupplungselement nach Anspruch 1, bei der die Außenhüllen (14a, 14b) der beiden Bowdenzüge (16a, 16b) nicht miteinander ausgerichtet sind.

3. Kupplungselement nach Anspruch 2, bei dem die Außenhüllen (14a, 14) gegeneinander versetzt oder relativ zueinander geneigt sind.

4. Kupplungselement nach einem der vorhergehenden Ansprüche, bei dem die Außenhüllen (14a, 14b) allgemein parallel zu der Bewegungsrichtung des Gleitstückes (22) angeordnet sind.

5. Kupplungselement nach einem der vorhergehenden Ansprüche, bei dem die Enden der inneren Zugseile (20a, 20b) mit seitlich vorspringenden Armen (22a, 22b) des Z-förmigen Gleitstückes (22) verbunden sind.

6. Kupplungselement nach einem der vorhergehenden Ansprüche, bei dem das Z-förmige Gleitstück (22) Befestigungseinrichtungen (26) zur Befestigung des Gleitstückes (22) an der Basis (12) umfasst.

7. Kupplungselement nach Anspruch 6, bei dem die Befestigungseinrichtungen (22) durch einen langgestreckten Schlitz (28) in der Basis (12) verlaufen, um eine Bewegung des Gleitstückes (22) relativ zu der Basis (12) zu ermöglichen.

8. Kupplungselement nach einem der vorhergehenden Ansprüche, bei dem die Basis (12) ein Teil eines das Gleitstück (22) umgebenden Gehäuses ist.

## Revendications

1. Élément d'accouplement destiné à accoupler les extrémités de deux câbles Bowden (16a, 16b) l'une à l'autre, comprenant une embase (12), des moyens (12a,12b) pour fixer les gaines extérieures (14a, 14b) des deux câbles (16a, 16b) à l'embase (12), et une liaison mécanique (22, 22a, 22b, 26) montée de manière mobile sur l'embase (12) et connectable aux câbles intérieurs (20a, 20b) des deux câbles Bowden (16a, 16b) pour transmettre la force d'un câble intérieur vers l'autre câble intérieur, la liaison mécanique étant constituée d'un coulisseau (22) guidé pour se déplacer par rapport à l'embase (12), les gaines extérieures (14a, 14b) des deux câbles (16a, 16b) étant fixées à l'embase (12) sur des côtés opposés du coulisseau (22), **caractérisé en ce que** le coulisseau (22) est en forme de Z et les extrémités des gaines extérieures (14a, 14b) sont généralement au même niveau l'une avec l'autre et les deux extrémités des gaines extérieures (14a, 14b) sont situées sur une ligne perpendiculaire à la ligne de déplacement du coulisseau (22).

2. Élément d'accouplement selon la revendication 1, **caractérisé en ce que** les gaines extérieures (14a, 14b) des deux câbles (16a, 16b) ne sont pas alignées l'une avec l'autre.

3. Élément d'accouplement selon la revendication 2, **caractérisé en ce que** les gaines extérieures (14a, 14b) sont décalées l'une par rapport à l'autre ou sont inclinées l'une par rapport à l'autre.

4. Élément d'accouplement selon l'une quelconque des revendications précédentes, **caractérisé en ce que** les gaines extérieures (14a, 14b) sont disposées généralement parallèlement à la direction de déplacement du coulisseau (22).

5. Élément d'accouplement selon l'une quelconque des revendications précédentes, **caractérisé en ce que** les extrémités des câbles intérieurs (20a, 20b) sont connectées à des bras faisant saillie latéralement (22a, 22b) du coulisseau en forme de Z (22).

6. Élément d'accouplement selon l'une quelconque des revendications précédentes, **caractérisé en ce que** le coulisseau en forme de Z (22) comprend des moyens de fixation (26) pour fixer le coulisseau (22) à l'embase (12).

7. Élément d'accouplement selon la revendication 6, **caractérisé en ce que** les moyens de fixation (26) passent à travers une fente allongée (28) dans l'embase (12) de façon à permettre au coulisseau (22) de se déplacer par rapport à l'embase (12).

8. Élément d'accouplement selon l'une quelconque des revendications précédentes, **caractérisé en ce que** l'embase (12) fait partie intégrante d'un logement entourant le coulisseau (22).
